(19)

Europäisches
Patentamt
European
Patent Office
Office européen
des brevets

(11) **EP 2 506 359 A2**

(12) **EUROPEAN PATENT APPLICATION**

(43) Date of publication:
**03.10.2012 Bulletin 2012/40**

(51) Int Cl.:
*H01M 10/50* (2006.01)      *H01M 10/42* (2006.01)

(21) Application number: **12161163.6**

(22) Date of filing: **26.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.03.2011 JP 2011081124**

(71) Applicant: **Kabushiki Kaisha Toyota Jidoshokki**
**Kariya-shi, Aichi 448-8671 (JP)**

(72) Inventor: **YAMAMOTO, Munetaka**
**Kariya-shi, Aichi 448-8671 (JP)**

(74) Representative: **TBK**
**Bavariaring 4-6**
**80336 München (DE)**

(54) **System and method for controlling heat transfer timing**

(57)    The heat transfer timing control system controls temperature of a battery using a heat source and includes two temperature measuring devices, a heat calculation device, a power supply device, a temperature distribution determination device and a heat transfer timing control device. The temperature measuring devices measure temperatures at different position of the battery. The heat calculation device calculates amount of heat that needs to be transferred to the battery. The power supply device supplies to the heat source power corresponding to the amount of heat. The temperature distribution determination device determines whether or not internal temperature distribution of the battery is uniformed. The control device operates the power supply device to transfer heat from the heat source to the battery and then re-operates the power supply device based on the determination of the temperature distribution determination device to control time to transfer heat from the heat source to the battery.

# FIG. 1

EP 2 506 359 A2

## Description

BACKGROUND OF THE INVENTION

The present invention relates to a system for controlling the temperature of a battery mounted on a vehicle.

Battery or battery pack varies in the characteristics of output power depending on environment and is sensitive to a change in temperature. Recently so-called "hybrid car" and "plug-in hybrid car" (or "hybrid vehicle" and "hybrid electric vehicle" hereinafter referred to merely as vehicle) having an electric motor as well as a gasoline engine have been put into practical use. In addition, an electric vehicle that is driven only by an electric motor without using an engine is being put into practical use.

As the power source that drives the motor, small but powerful lithium-ion batteries are widely used. The lithium-ion battery, whose characteristics greatly vary depending on temperature, should preferably be operated with as little temperature variation as possible. Thus, the lithium-ion battery requires improvement its energy efficiency. Therefore, it is important to realize an intelligent temperature control for a battery mounted in a vehicle.

Japanese Unexamined Patent Application Publication No. 2011-23180 discloses an assembled battery and a mechanism for controlling the temperature of the battery. The assembled battery includes a cooling mechanism that cools a plurality of battery cells of the assembled battery and a heating element that is thermally coupled to at least one battery cell whose cooling capacity is at or greater than the average among the battery cells and the controlling is done in such a way that the difference between the temperature detected by a temperature sensor thermally coupled to the battery cell whose temperature is the lowest and the temperature detected by another temperature sensor thermally coupled to the battery cell whose temperature is the highest is reduced. Thus reducing the temperature difference between the battery cells allows the battery cells to be used with high reliability.

In the battery according to this first cited reference, the cooling mechanism and the heating element are arranged appropriately so as to reduce the temperature difference among the battery cells. The heating element is activated when the difference between the temperatures detected by the temperature sensors exceeds a predetermined threshold value. For the battery to operate most efficiently, however, there is a need to transfer heat to the battery and to stop the transferring of heat as required. In the case of the controlling according to the reference wherein heat is transferred to the battery when the temperature difference exceeds the predetermined threshold value, controlling in such a way that determines the time to transfer the heat to the battery for the next time cannot be done and, therefore, optimum temperature control cannot be accomplished. The provision of the cooling mechanism and the heating element as well as the temperature sensors disposed on the battery cells makes the assembled battery complicated in structure, which increases the cost of the system.

Japanese Unexamined Patent Application Publication No. 2004-311290 discloses a battery pack having a plurality of battery modules. Two system main relays are located on the opposite ends of the battery pack. Electronic control unit (ECU) includes two circuits, one of which detects the battery temperature based on the signals sent from a plurality of temperature sensors mounted on the battery pack, and the other of which controls the operation of the system main relays based on the detected temperature in such a way that the duty ratio of electric current for application to the solenoid of the system main relay which is located adjacent to one end of the battery pack and whose temperature is higher than that of the other end of the battery pack is reduced and also that the duty ratio of electric current for application to the solenoid of the system main relay which is located adjacent to the other end of the battery pack and whose temperature is lower than that of the one end of the battery pack is increased.

In the battery pack of this second reference, the temperatures of battery cells can be uniformed without using any special temperature control mechanism. However, the second reference mentions only the condition for transferring heat based on the relation between the temperatures detected by different temperature sensors.

Japanese Unexamined Patent Application Publication No. 2008-041376 discloses a warming/cooling system for a vehicular assembled battery. The warming/cooling system includes an assembled battery pack that houses a lithium-ion assembled battery made of a plurality of combined lithium-ion electric cells, a power supply unit box that houses various power supply devices and equipment in one box, an air intake duct and a blower that supply the air in a vehicle interior to the assembled battery pack, an air supply duct and a fan that supply the warmed air in the power supply unit box to the assembled battery pack, a switching mechanism that switches between the air supply from the air intake duct and the air supply from the air supply duct, and a control unit. The control unit controls the operation of the switching mechanism in accordance with the difference in temperature between the end position and a middle position of the assembled battery and also the outside air temperature.

The warming/cooling system of this third reference enables rapid warming of the assembled battery of the warming/cooling system of the vehicular assembled battery while reducing the internal temperature variation of the assembled battery. However, the third reference only discloses the switching between warming and cooling in accordance with the outside air temperature and the temperature difference of the assembled battery, but provides no mention about the timing of the next warming.

The present invention is directed to a system and a method for controlling heat transfer timing according to which appropriate controlling of the time to continually transfer heat from a heat source to a plurality of batteries is accomplished by a simple mechanism and just enough amount of heat is transferred to the batteries, which reduces the temperature variation of the batteries.

SUMMARY OF THE INVENTION

In accordance with a first aspect of the present invention, the heat transfer timing control system controls temperature of a battery using a heat source. The heat transfer timing control system includes a first temperature measuring device, a second temperature measuring device, a heat calculation device, a power supply device, a temperature distribution determination device and a heat transfer timing control device. The first temperature measuring device is mounted on the battery at a first position that is the closest to the heat source for measuring a first temperature at the first position. The second temperature measuring device is mounted on the battery at a second position that is the farthest from the heat source for measuring a second temperature at the second position. The heat calculation device calculates a first temperature difference between the first temperature and a target temperature and a second temperature difference between the second temperature and the target temperature to calculate an amount of heat that needs to be transferred to the battery in accordance with the first temperature difference and the second temperature difference. The power supply device supplies to the heat source electric power corresponding to the amount of heat thereby to transfer heat from the heat source to the battery. The temperature distribution determination device calculates a third temperature difference between the first temperature and the second temperature to determine whether or not internal temperature distribution of the battery is uniformed. The heat transfer timing control device operates the power supply device to transfer the heat from the heat source to the battery and then reoperates the power supply device based on the determination of the temperature distribution determination device to control time to transfer heat from the heat source to the battery.

In accordance with a second aspect of the present invention, the heat transfer timing control method controls temperature of a battery using a heat source. The heat transfer timing control method includes the steps of measuring a first temperature at a first position of the battery that is the closest to the heat source, measuring a second temperature at a second position of the battery that is the farthest from the heat source, calculating a first temperature difference between the first temperature and a target temperature and a second temperature difference between the second temperature and the target temperature, calculating an amount of heat that needs to be transferred to the battery in accordance with the first temperature difference and the second temperature difference, transferring heat from the heat source to the battery by supplying to the heat source electric power corresponding to the amount of heat, determining whether or not internal temperature distribution of the battery is uniformed by calculating a third temperature difference between the first temperature and the second temperature, and controlling time to transfer heat from the heat source to the battery based on the determination of the internal temperature distribution of the battery.

Other aspects and advantages of the invention will become apparent from the following description, taken in conjunction with the accompanying drawings, illustrating by way of example the principles of the invention.

BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:

Fig. 1 is a configuration diagram showing an embodiment of the present invention;

Fig. 2 is an illustration explaining the operation of the present embodiment;

Fig. 3 is a graph showing the operating characteristics of the present embodiment; and

Fig. 4 is a flowchart illustrating the procedure of the operation of the present embodiment.

DETAILED DESCRIPTION OF THE EMBODIMENTS

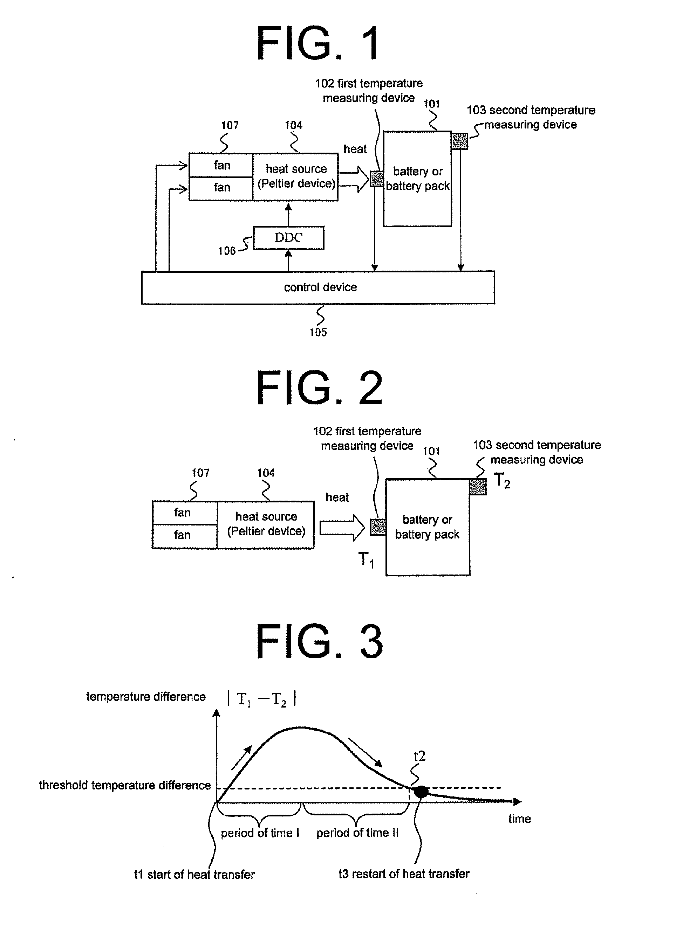

The following will describe the embodiment of the present invention with reference to the accompanying drawings. Fig. 1 is a configuration diagram showing the embodiment of the present invention. The present embodiment is conducted as a temperature control system that heats a battery mounted on a vehicle.

A lithium-ion battery is used for battery or a battery pack 101 that drives a vehicle. The battery 101 includes a plurality of battery modules.

The battery 101 is provided with first and second temperature measuring devices 102 and 103 that measure the temperature of the battery 101. A thermistor that serves as a semiconductor resistance temperature sensor is used for the temperature measuring devices 102 and 103. The arrangement of the temperature measuring devices 102 and 103 will be described later herein.

A heat source 104 is located in close contact with the battery 101 for heating and cooling the battery 101. A Peltier device that is a type of thermoelectric element is used for the heat source 104. The heat source 104 is provided with fans 107 that cool the heat source 104 itself and also facilitate the transfer of heating and cooling energy of the heat source 104 to the battery 101. Each fan 107 has a motor and moving blades connected to the shaft of the motor directly.

The system includes a control device 105 that controls the whole of the operation of the temperature control system. The control device 105 serves as a computer unit and a power unit. The system further includes a DC-DC converter (hereinafter referred to merely as DDC) 106 that increases or decreases the voltage of power supplied from the control device 105 to a predetermined level that drives the heat source 104. The control device 105 monitors the temperatures at different positions of the battery 101 that are detected by the temperature measuring devices 102 and 103. Based on the temperatures detected by the temperature measuring devices 102 and 103, the control device 105 calculates the amount of heat that needs to be transferred from the heat source 104 to the battery 101. The control device 105 determines the output current corresponding to the calculated amount of heat and drives the Peltier device of the heat source 104 via the DDC 106 so as to reduce the temperature variation between the battery modules of the battery 101. The control device 105 drives the fans 107. The control device 105 has not only CPU (central processing unit) and memory but also interface circuits for the battery 101, the temperature measuring devices 102, 103 and the fans 107. The interface circuits are connected to each other via buses. The CPU of the control device 105 executes the control program stored in the memory thereby to perform the following controlling operation.

The following will describe the operation of the present embodiment. Fig. 2 is an illustration explaining the operation of the present embodiment. In controlling the temperature of the battery 101, there occurs a temperature difference between the first position of the battery 101 that is the closest to the heat source 104 and the second position of the battery 101 that is the farthest from the heat source 104 due to time lag of heat transfer. In the present embodiment, the first temperature measuring device 102 is mounted on the battery 101 at the first position that is the closest to the heat source 104. The second temperature measuring device 103 is mounted on the battery 101 at the second position that is the farthest from the heat source 104. The first and second temperatures detected by the first and second temperature measuring devices 102 and 103 will be expressed by $T_1$ and $T_2$, respectively. The amount of heat that needs to be transferred from the heat source 104 to the battery 101 is calculated by the following expression.

$$Q_P = C \{ (\Delta T_1 + \Delta T_2) / 2 \} \quad (1)$$

where $Q_P$ is the amount of heat that needs to be transferred from the heat source 104 to the battery 101 and C is heat capacity of the battery 101. $\Delta T_1$ and $\Delta T_2$ are calculated by the following expression.

$$\Delta T_1 = TG - T_1 \qquad (2)$$

$$\Delta T_2 = TG - T_2 \qquad (3)$$

where TG is the target temperature of the battery 101. That is, $\Delta T_1$ of the expression (2) is the first temperature difference between the target temperature TG and the first temperature $T_1$ detected by the first temperature measuring device 102. $\Delta T_2$ of the expression (3) is the second temperature difference between the target temperature TG and the second temperature $T_2$ detected by the second temperature measuring device 103. In the expression (1), therefore, firstly the average value of the temperature differences $\Delta T_1$ and $\Delta T_2$ is calculated as indicated by the curly brackets. The value $Q_P$ obtained by multiplying the average value of the temperature differences by the heat capacity of the battery 101 is calculated as the amount of heat that is necessary to be transferred from the heat source 104 to the battery 101 in order that the temperature of the battery 101 becomes close to the target temperature TG.

Fig. 3 is a graph showing the operating characteristics of the present embodiment. The graph of Fig. 3 shows when heat transfer should be restarted while the temperature difference between $T_1$ and $T_2$ is monitored after heat transfer is started.

The transfer of the heat of the heat source 104 to the battery 101 is started at the time t1. The absolute value | $T_1$ - $T_2$ | of the third temperature difference between $T_1$ and $T_2$ increases progressively during the period of time I subsequent to the start time t1. Although the heat transfer is stopped when the necessary amount of heat falls to a threshold amount of heat, the absolute value | $T_1$ - $T_2$ | is continued to be monitored.

During the period of time II after the heat transfer is stopped, the absolute value | $T_1$ - $T_2$| of the temperature difference decreases. Restarting of the heat transfer is not done until the absolute value | $T_1$ - $T_2$| of the temperature difference falls below the threshold temperature difference and the temperature of the battery 101 is uniformly distributed.

At the time t2, the absolute value | $T_1$ - $T_2$ | reaches the threshold temperature difference. After the time t2, the absolute value |$T_1$ - $T_2$| falls below the threshold temperature difference and temperature of the battery 101 is uniformly distributed. Then, at the time t3 when the necessary amount of heat exceeds the threshold amount of heat, heat transfer is restarted.

In the present embodiment wherein after the transfer of necessary amount of heat has been performed, heat transfer is not restarted until the absolute value | $T_1$ - $T_2$ | falls below the threshold temperature difference and the temperature of the battery 101 is uniformly distributed, the internal temperature variation of the battery 101 is reduced, so that the energy efficiency of the battery 101 is enhanced.

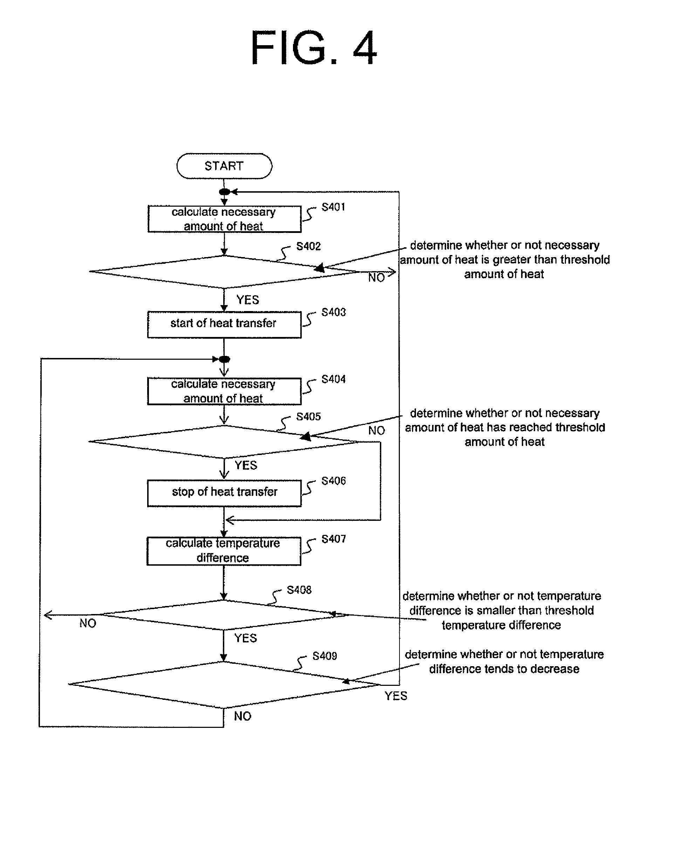

Fig. 4 is a flowchart illustrating the steps of operation executed by the control device 105 of Fig. 1. The control device 105 receives information of the temperatures $T_1$ and $T_2$ measured by the temperature measuring devices 102 and 103, respectively. At the step S401, the control device 105 calculates the temperature differences $\Delta T_1$ and $\Delta T_2$ based on the expressions (2) and (3), and also calculates the necessary amount of heat $Q_P$ based on the expression (1). The control device 105 thus serves as the heat calculation device of the present invention.

At the step S402, the control device 105 determines whether or not the calculated amount of heat $Q_P$ is greater than the threshold amount of heat. If NO at the step S402, or if the calculated amount of heat $Q_P$ is not greater than the threshold amount of heat, the steps S401 and S402 are repeated until the calculated amount of heat $Q_P$ becomes greater than the threshold amount of heat.

If YES at the step S402, or if the calculated amount of heat $Q_P$ is greater than the threshold amount of heat, the control device 105 controls the operation of the DDC 106 so as to supply to the heat source 104 the electric power corresponding to the necessary amount of heat $Q_P$ calculated at the step S401. Accordingly, the transfer of heat of the heat source 104 to the battery 101 is started at the step S403. The step S403 is executed at the time t1 in Fig. 3. The control device 105 serves as the power supply device of the present invention.

At the step S404 the control device 105 calculates the necessary amount of heat $Q_P$ as in the case of the step S401. At the step S405 the control device 105 determines whether or not the calculated amount of heat $Q_P$ has reached the threshold amount of heat.

If NO at the step S405, or if the calculated amount of heat $Q_P$ has not reached the threshold amount of heat, the control device 105 controls the operation of the DDC 106 so as to allow the heat transfer from the heat source 104 to the battery 101 to be continued, which substantially corresponds to the period of time | in Fig. 3.

If YES at the step S405, or if the calculated necessary amount of heat $Q_P$ has reached the threshold amount of heat, the control device 105 causes the DDC 106 to stop its operation thereby to stop supplying the power to the heat source 104. Accordingly, at the step S406, the transfer of heat of the heat source 104 to the battery 101 is stopped.

At the step S407 after performing the step S405 or the S406, the control device 105 receives information of the temperatures $T_1$ and $T_2$ measured by the temperature measuring devices 102 and 103, respectively, and calculates the absolute value $|T1 - T_2|$ of the temperature difference between the $T_1$ and $T_2$. At the step S408, the control device 105 determines whether or not the absolute value $|T_1 - T_2|$ of the calculated temperature difference is smaller than the threshold temperature difference. The control device 105 serves as the temperature distribution determination device of the present invention.

If NO at the step S408, or if the absolute value $|T_1 - T_2|$ of the calculated temperature difference is not smaller than the threshold temperature difference, the operation of the control device 105 is retuned to the step S404, from which the controlling by the control device 105 is restarted.

If YES at the step S408, or if the absolute value $|T_1 - T_2|$ is smaller than the threshold temperature difference, the control device 105 determines at the step S409 whether or not the absolute value $(n + 1)T$ of the temperature difference according to the current measurement is smaller than the absolute value $nT$ of the temperature difference according to the last measurement, where n denotes discrete time of measurement. That is, it is determined whether or not the absolute value of the temperature difference tends to decrease (as indicated by the period of time II of Fig. 3).

If NO at the step S409, or if the transfer of heat of the heat source 104 to the battery 101 is still continued and the absolute value of the temperature difference tends to increase as in the case of the period of time I of Fig. 3, the absolute value of the temperature difference right after the start of the heat transfer at the time t1 of the period of time I in Fig. 3 is smaller than the threshold temperature difference. In this case, the operation of the control device 105 is returned to the step S404 so that the control device 105 continues monitoring the absolute value of the temperature difference. Thus, the control device 105 repeats the step S404 through S409.

On the other hand, if YES at the step S409, or if the transfer of heat of the heat source 104 to the battery 101 is stopped and the absolute value of the temperature difference tends to decrease as in the case of the period of time II in Fig. 3, the distribution of heat in the battery 101 has been substantially uniformed at the time t2 in Fig. 3. The control device 105 is ready to calculate the temperature differences $\Delta T_1$ and $\Delta T_2$ for the next heat transfer beginning with the step S401. Thus, the control device 105 serves as the heat transfer timing control device of the present invention. If YES at the step S402, or if the calculated necessary amount of heat $Q_P$ is greater than the threshold amount of heat again, the control device 105 controls the operation of the DDC 106 so that the electric power corresponding to the necessary amount of heat $Q_P$ calculated at the step S401 is resupplied to the heat source 104. Thus, at the step S403 the transfer of heat of the heat source 104 to the battery 101 is restarted at the time t3 in Fig. 3.

As described above, the first temperature measuring device 102 is mounted on the battery 101 at the first position that is the closest to the heat source 104 and the second temperature measuring device 103 is mounted on the battery 101 at the second position that is the farthest from the heat source 104. After the transfer of heat of the heat source 104 to the battery 101 is started, the next heat transfer is not started until the absolute value $| T_1 - T_2 |$ of the difference between the temperatures $T_1$ and $T_2$ measured by the temperature measuring devices 102 and 103 falls below the threshold temperature difference and the internal temperature of the battery 101 is substantially uniformed. According to the present embodiment, appropriate controlling of the time to continually transfer heat from the heat source 104 to the battery 101 can be accomplished by a simple mechanism and just enough amount of heat is transferred to the battery, which reduces the internal temperature variation of the battery 101 and enhances the energy efficiency of the battery 101.

The heat transfer timing control system controls temperature of a battery using a heat source and includes two temperature measuring devices, a heat calculation device, a power supply device, a temperature distribution determination device and a heat transfer timing control device. The temperature measuring devices measure temperatures at different position of the battery. The heat calculation device calculates amount of heat that needs to be transferred to the battery. The power supply device supplies to the heat source power corresponding to the amount of heat. The temperature distribution determination device determines whether or not internal temperature distribution of the battery is uniformed. The control device operates the power supply device to transfer heat from the heat source to the battery and then re-operates the power supply device based on the determination of the temperature distribution determination device to control time to transfer heat from the heat source to the battery.

**Claims**

1. A heat transfer timing control system that controls temperature of a battery (101) using a heat source (104), **characterized in that**
a first temperature measuring device (102) is mounted on the battery (101) at a first position that is the closest to the heat source (104) for measuring a first temperature ($T_1$) at the first position,
wherein a second temperature measuring device (103) is mounted on the battery (101) at a second position that is the farthest from the heat source (104) for measuring a second temperature ($T_2$) at the second position,
wherein a heat calculation device (105) is provided for calculating a first temperature difference ($\Delta T_1$) between the first temperature ($T_1$) and a target temperature (TG) and a second temperature difference ($\Delta T_2$) between the second temperature ($T_2$) and the target temperature (TG) to calculate an amount of heat ($Q_P$) that needs to be transferred to the battery (101) in accordance with the first temperature differ-

ence ($\Delta T_1$) and the second temperature difference ($\Delta T_2$),
wherein a power supply device (105) is provided for supplying to the heat source (104) electric power corresponding to the amount of heat ($Q_P$) thereby to transfer heat from the heat source (104) to the battery (101),
wherein a temperature distribution determination device (105) is provided for calculating a third temperature difference ($| T_1 - T_2 |$) between the first temperature ($T_1$) and the second temperature ($T_2$) to determine whether or not internal temperature distribution of the battery (101) is uniformed, and
wherein a heat transfer timing control device (105) is provided for operating the power supply device (105) to transfer the heat from the heat source (104) to the battery (101) and then re-operating the power supply device (105) based on the determination of the temperature distribution determination device (105) to control time to transfer heat from the heat source (104) to the battery (101).

2. A heat transfer timing control method that controls temperature of a battery (101) using a heat source (104), **characterized by** the steps of:

measuring a first temperature ($T_1$) at a first position of the battery (101) that is the closest to the heat source (104);
measuring a second temperature ($T_2$) at a second position of the battery (101) that is the farthest from the heat source (104);
calculating a first temperature difference ($\Delta T_1$) between the first temperature ($T_1$) and a target temperature (TG) and a second temperature difference ($\Delta T_2$) between the second temperature ($T_2$) and the target temperature (TG);
calculating an amount of heat ($Q_P$) that needs to be transferred to the battery (101) in accordance with the first temperature difference ($\Delta T_1$) and the second temperature difference ($\Delta T_2$);
transferring heat from the heat source (104) to the battery (101) by supplying to the heat source (104) electric power corresponding to the amount of heat ($Q_P$);
determining whether or not internal temperature distribution of the battery (101) is uniformed by calculating a third temperature difference ($| T_1 - T_2 |$) between the first temperature ($T_1$) and the second temperature ($T_2$); and controlling time to transfer heat from the heat source (104) to the battery (101) based on the determination of the internal temperature distribution of the battery (101).

# FIG. 1

102 first temperature
measuring device  101

103 second temperature
measuring device

107    104

heat

fan

fan

heat source
(Peltier device)

battery or
battery pack

DDC

106

control device

105

# FIG. 2

102 first temperature
measuring device  101

103 second temperature
measuring device

$T_2$

107    104

heat

fan

fan

heat source
(Peltier device)

battery or
battery pack

$T_1$

# FIG. 3

temperature difference    $| T_1 - T_2 |$

threshold temperature difference

t2

time

period of time I    period of time II

t1 start of heat transfer

t3 restart of heat transfer

# FIG. 4

START

calculate necessary
amount of heat — S401

S402 — determine whether or not necessary
amount of heat is greater than threshold
amount of heat

NO

YES

start of heat transfer — S403

calculate necessary
amount of heat — S404

S405 — determine whether or not necessary
amount of heat has reached threshold
amount of heat

NO

YES

stop of heat transfer — S406

calculate temperature
difference — S407

S408 — determine whether or not temperature
difference is smaller than threshold
temperature difference

NO

YES

S409 — determine whether or not temperature
difference tends to decrease

YES

NO

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011023180 A
- JP 2004311290 A
- JP 2008041376 A